# EUROPEAN PATENT SPECIFICATION

(11) **EP 0 463 202 B1**
(45) Date of publication and mention of the grant of the patent: **08.04.1998**
(21) Application number: 90112046.9
(22) Date of filing: 25.06.1990
(51) Int. Cl.: A01N 63/00

(54) **Composition and method for sterilizing pathogens in the presence of water**
Zusammensetzung und Verfahren zur Sterilisierung der Pathogene in Gegenwart von Wasser
Composition et méthode pour la stérilisation des pathogènes en présence de l'eau

(43) Date of publication of application: 02.01.1992
(73) Proprietor: SYMBOLLON INC., Ashland, Ma. 01721 (US)
(72) Inventor: Kessler, Jack, Dr., Ashland, MA 01721 (US)
(74) Representative: Kinzebach, Werner, Dr.

(56) References cited:
- EP-A- 0 175 801
- EP-A- 0 307 376
- US-A- 4 370 199
- CHEMICAL ABSTRACTS, vol. 104, no. 13, 31 March 1986, Columbus, OH (US); S. HONBO et al., p. 25, AN 102006q
- CHEMICAL ABSTRACTS; VOL: &(; NO: /; +" February 1968, Columbus, OH (US); S.J. KLEBANOFF, p. 2665, AN 27662h

## Description

The subject invention relates to a nontoxic chemical sterilant and method for sterilizing pathogens in the presence of water.

### BACKGROUND OF THE INVENTION

Microorganisms have adapted to a wide range of environments. Natural selection has resulted in a tolerance of diverse physical and chemical environments by bacteria, viruses, fungi, algae and spores. The ability to inactivate all viable pathogens, including bacteria, viruses, fungi, algae and spores, in the presence of water, is herewith defined as sterilization. A sterilant will inactivate all pathogens, as opposed to a disinfectant, which has a limited spectrum of activity.

Sterilization may be achieved by the use of heat, chemicals, irradiation, and filtration. Traditional chemical sterilants and sterilization regimens include formaldehyde, glutaraldehyde, peroxyacetic acid/heat, ultraviolet radiation, chlorine, and chlorine derivatives. All of the known chemical sterilants are either toxic or corrosive, and will cause environmental safety problem if not carefully and properly disposed of. Most of these chemicals also cause human irritation to the eyes, skin and olfactory senses. A non-toxic chemical sterilant which kills all pathogenic microorganisms and is environmentally safe has significant utility.

In addition to defining the activity of a chemical sterilant against pathogens, an important characteristic of chemical sterilants is their toxicological properties. Specifically, it is important that these sterilizing agents: (1) do not irritate upon contact with human skin, (2) do not cause allergic reactions, (3) can be accidently ingested without harm, (4) do not smell, and (5) are not mutagenic. It has proven very difficult, if not impossible, to find chemical sterilants which are rapidly toxic to all pathogenic organisms and completely non-toxic and non-irritating to humans. The subject invention describes the use of a peroxidase-based peroxidase-disinfectant chemistry for the inactivation of all types of pathogenic organisms, including spores, viruses, Mycobacterium tuberculosae, dehydrated pathogens, and fungi, in the presence of water. Additionally, this application describes conditions which: (1) maintain a nascently sterilized environment for extended periods of time, (2) yield excellent toxicological properties for a cold chemical sterilant, and (3) exhibit activity in the presence of a 10% organic load.

Peroxidases are defined as enzymes which reduce hydrogen peroxide to water. Peroxidases effect the reduction of hydrogen peroxide by removing electrons from donor molecules and transferring these reducing equivalents to hydrogen peroxide. Two reducing equivalents are required for each molecule of hydrogen peroxide. A reaction cycle includes: (1) binding hydrogen peroxide to peroxidase, (2) transferring an electron from the first donor molecule to hydrogen peroxide, and (3) transferring an electron from the second donor molecule to hydrogen peroxide. Each time an electron is removed from a donor molecule the corresponding free radical is generated.

In U.S. Patent No. 4,476,108, a mechanism is described for the antimicrobial action of selected peroxidase-initiated reactions based upon the formation of free radicals. This mechanism attributes antibacterial action to free radicals or the by-products of free radicals.

Bactericides are not, however, expected to be able to inactivate viruses, yeasts and spores. K.H. Kato and A.J. Mencke, U.S. Patent No. 4,485,029, describe the inactivation of the yeasts Candida albicans and Aspergillus fumigatus by a known bactericidal formulation of glycerol monolaurate and para-hydroxybenzoic acid as "surprising and unexpected."

The subject invention teaches a formulation of peroxidase, peroxide-generating compounds, and iodide, which serve to inactivate all pathogenic organisms, including spores, Mycobacterium tuberculosae, fungi, dehydrated bacteria and viruses, in the presence of water. The composition of the present invention can be made to remain active for weeks and exhibit no deleterious toxicological properties.

The active maintenance of a sterile environment for a defined period of time once an environment has been sterilized is also needed. One method of actively maintaining a sterile environment when utilizing the peroxidase, peroxide, iodide system of the present invention is to increase the concentration of peroxide to a concentration where it itself acts as an inhibitor to bacterial growth. The difficulty with this approach is that elevated concentrations of peroxide can inhibit the ability of the peroxidase, peroxide, iodide system from functioning. That is, at elevated peroxide concentrations, the disinfecting ability of peroxide contributes to the bactericidal efficacy instead of the enzyme-catalyzed reaction. In accordance with the formulation of the present invention, the peroxide concentration may be as low as .0003%, and as high as 0.3% weight to volume.

The peroxidase of this invention is preferably horseradish peroxidase, and is identified by the International Union of Biochemistry and the International Union of Pure and Applied Chemistry, Enzyme Commission identification No. E.C. 1.11.1.7. Peroxidase can be obtained from a wide variety of sources. Commercially obtained peroxidase comes lyophilized as a dry powder. The peroxidase component in the sterilant composition of the subject invention should lie between 0.00005 and 1.0 mg/ml.

Iodide is unexpectedly unique and critical to the composition of the present invention as the source of donor molecules. Other donor molecules will not result in sterilization, although other donor molecules may be effective to cause bactericidal disinfection. When the source of donor molecules is a salt of iodide, a relationship has been found to exist between the rate of sterilization and the pH of the fluid medium. This relationship is dependent upon the presence of iodide and causes the rate of sterilization to increase exponentially as the pH of the medium decreases over a predetermined pH range. This relationship does not exist with other donor molecules. The increase in the rate of sterilization is effected in accordance with the present invention by controlling the iodide concentration of the composition and the pH of the environment in which the peroxidase-based sterilant acts. The rate at which the peroxidase-based sterilant inactivates pathogens is exponentially increased when the pH of the environment is adjusted to a value between pH 4.0 and pH 6.8, optimally between pH 5.0 and pH 6.5.

Suitable sources of iodide for this invention include sodium iodide and potassium iodide, although many other salts of iodide are also suitable. Compounds which yield iodide ions upon dissolution in an aqueous-based solvent are potentially suitable for use. The simple salts of iodide have the advantage of being inexpensive and exhibiting essentially infinite shelf life, both in solid and liquid form. The iodide concentration is solution is critical to the present invention and should be present in a minimum concentration of 1.67 millimolar (0.25 mg/ml for sodium iodide), and preferably above 3.34 millimolar (0.5 mg/ml for sodium iodide). For practical reasons, a molar ratio of iodide to peroxide should be selected between 0.5 and 1.0. Below the minimum iodide concentration, sterilization is limited, if effective at all.

The oxidant of this invention is hydrogen peroxide or a compound which generates or yields hydrogen peroxide upon dissolution in an aqueous-based carrier. Such hydrogen peroxide-generating compounds are well known to those skill in the art. Suitable peroxide materials include hydrogen peroxide, methyl peroxide, persulphates, perphosphates, peroxyesters, urea peroxide, peroxyacids, alkylperoxides and perborates. Mixtures of two or more or these substances can also be used.

The integral components of this invention include a peroxide source, peroxidase and an iodide salt, and should preferably further include one or more buffering agents. Upon admixture with an aqueous medium, the pH buffers adjusts the pH of the medium to between a pH of 4.0 and 6.8. Suitable buffering agents include citrate, phosphate, pthalate, and the buffers identified by N. E. Goode in Analytical Biochem, (1980) Vol. 104, page 300, and referred to as "Goode Buffers."

The formulation must be stored in a fashion such that the enzymatic reaction is not initiated until its sterilizing properties are desired. It is acceptable to combine any two of the integral components of the group consisting of the peroxide source, iodide or peroxidase, and to isolate those two from the third component in order to effect this end. It is also possible to store the components of this system in a powder or pill form, such that the enzymatic reaction is precluded until such time as said powder or pill is admixed in a suitable carrier. In cases where it is desirable to actively maintain a sterile environment for a defined period of time by running the reaction at elevated peroxide concentrations, it is preferable to add the peroxide component of the reaction last. For instance, one could combine high concentrations of iodide with peroxidase in a suitable carrier and add peroxide to said carrier as a last step. If a powder or pill is desired for use in an application where it is required to actively maintain a sterile environment for a defined period of time, it is possible to add a formulation wherein iodide and enzyme dissolve rapidly and peroxide is released slowly over time.

It has further been discovered, in accordance with the present invention, that the formulation of a peroxide source, peroxidase, and an iodide salt, preferably also including a pH buffering agent, will permit sterilization to occur even in a highly viscous, aqueous medium. The viscous medium may be composed of an emollient composition having a viscosity in a range of from 2.5 centipoise to 100 centipoise. An example of such a viscous, fluid medium would be an epidermal emollient (soap) formulation with a high concentration of surface active agents. The surface active agents may include one or more surfactants, lathering agents, thickening agents, humectants, foam stabilizers, and glycerol, glucose, fructose, and galactose. The salt of iodide component is also critical for use as the source of donor molecules in a viscous formulation. Other donor molecules cannot function in a viscous medium even as low as 2.5 centipoise.

The composition of the present invention is formulated to work upon contact with an aqueous medium. Preferably a defined volume of water is admixed with the sterilizing components in the formulation of the present invention such that the individual components are diluted by 50 to 1000% in the aqueous medium.

Accordingly, the present invention broadly covers a method for sterilizing pathogens in the presence of water comprising the steps of:
selecting three components including a source of peroxide, a peroxidase selected from the class contained in the E.C. 1.11.1.7, and an iodide, storing the three components in a non-reacting state, and introducing the three components into an aqueous medium to cause a catalyzed reaction for generating sterilization agents from said salt of iodide for sterilizing said medium substantially free of all pathogens.

Additional control over sterilization is effected by adding, as a fourth component, a buffering agent to cause the pH of the liquid medium to lie between pH 4.0 and pH 6.8, and optimally between pH 5.0 and pH 6.5.

The present invention also covers a sterilizing composition for sterilizing pathogens in the presence of water characterized by a source of iodide, a source of peroxide, a peroxidase contained in the E.C. 1.11.1.7, and a buffer, with the buffer selected to control the pH of the medium between pH 4.0 and pH 6.8.

### BRIEF DESCRIPTION OF THE DRAWING

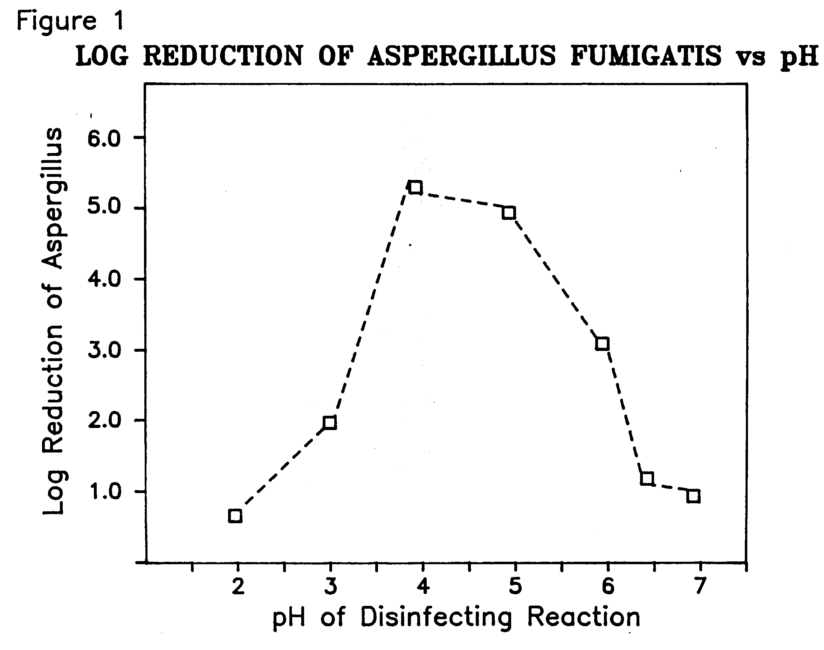

Figure 1 shows the reduction in viable Aspergillus fumigatus in a viscous liquid formulation as a function of pH over a five minute time period.

### PREFERRED EMBODIMENT OF THE INVENTION

A prerequisite for the storage of the sterilant formulation is the prevention of its three primary components from combining under conditions wherein the catalytic process is initiated. That is, it is imperative that the storage of the enzymatic components will not allow the depletion of said components until the enzymatic reaction is purposely initiated immediately prior to use. If the enzymatic components are permitted to interact before intended for sterilization, the inevitable depletion of the enzyme's substrate molecules (peroxide and iodide) will result, and thereby attenuate the effectiveness of the formulation. It is acceptable to combine any two of the enzymatic components (peroxide source, iodide and peroxidase) of this system, and isolate them from the third component in order to effect this end. That is, if it is practical to separate any one of the three enzymatic components from the other two prior to initiation of the enzymatic reaction, it will serve the purpose of preserving the integrity of the formulation. Alternately, it is possible to have two separate mixtures which contain any two of the enzymatic components of the system in any combination, and to combine these two mixtures immediately prior to use.

It is also possible to store the components of this system in a powder or pill form, such that the enzymatic reaction is precluded until such time as said powder or pill is admixed in a suitable carrier. If a powder or pill is desired for use in an application where it is required to actively maintain a sterile environment for a defined period of time, it is possible to add a formulation wherein iodide and enzyme dissolve rapidly and peroxide is released slowly over time.

The preferred pH range in which to run the sterilizing enzymatic chemistry of this application is between pH 4.0 and pH 6.8, with the optimum pH range of between pH 5.0 and pH 6.5. As shown in Figure 1, the rate of sterilization is increased as the pH is lowered from pH 6.8. The sterilization occurs more rapidly at pH 5.5 than at pH 6.0. If the pH is lowered too far, the enzyme will not function as rapidly and the environment will present a greater possibility for causing irritation to human tissue which comes in contact with either the sterilizing chemistry or devices which have come in contact with the sterilizing chemistry.

The iodide concentration in solution is critical to the present invention since it will determine the spectrum of antipathogenic activity and the rate of activity. The concentration range of iodide is 1.67 millimolar (0.25 mg/ml of sodium iodide) to 33.4 millimolar. The preferred range of iodide is 3.34 millimolar to 33.4 millimolar. The upper amount is optional.

The sterilant composition of the present invention will effect sterilization of any aqueous medium, even one which is highly viscous. In the latter instance, the sterilant composition may be incorporated to form a soap formulation such that, when admixed with water, it may be used as an epidermal cleaner and sterilant. The soap formulation may consist of surface active agents which are well known for this purpose, such as a class of molecules comprised of anionic, cationic, zwitterionic, non-ionic, and ampholytic surface active agents. The pH buffering agent used in the sterilant composition should be selected to be compatible with the active components and not affect the shelf-life of the product.

The sterilant composition may be formulated in two separate formulations which are combined with water immediately prior to use. The first formulation may contain the enzyme peroxidase (Enzyme Commission Identification No. E.C. 1.11.1.7), and an iodide compound in a weakly buffered composition, such as glycerol, at a pH between 7.0 and 9.0. The second formulation may then contain hydrogen peroxide in a strongly buffered composition. The two formulations are comprised such that, when they are combined with water in the intended fashion, the pH of the final admixture is between 4.0 and 6.8. The source of iodide is preferably only in the peroxidase-containing component of the invention. Formulating peroxidase in combination with the iodide compound at a pH between 7.0 and 9.0 in glycerol or other suitable carriers like sucrose, fructose, galactose, glucose, or maltose, maximizes the stability of the enzyme and iodide. Insuring a pH between 4.0 and 6.8 in the final sterilant admixture, maximizes the speed, increases the shelf-life, and minimizes the cost of the final product.

The invention is further described in the examples which follow. All parts and percentages are by weight unless otherwise specified.

### EXAMPLES

1. A powder containing 10.0 mg horseradish peroxidase, 1 gram of sodium iodide, 0.158 grams of sodium perborate, and 0.30 grams of sodium phosphate was dissolved in 1 liter of tap water. A clinically positive sample of Mycobacterium tuberculosae was taken from Lowenstein-Jensen medium slants (BBL #20909) and cultured using 5 ml of Middlebrook 7H-9 broth (BBL #97151). After one week of growth, 0.010 ml of this culture was serially diluted in saline and cultured to determine the numbers of colony forming units (cfu). Approximately 1-2,000,000 cfu was added to 2 ml of the above peroxidase-containing solution and to saline controls. The peroxidase containing samples were incubated at room temperature. Samples (0.05 ml) were removed at 30, 60, 120 and 240 minutes and cultured. These samples were incubated on Lowenstein-Jensen medium for three weeks at 36°C and inspected weekly for growth. The number of typical "rough" colonies of Mycobacterium tuberculosae were counted after three weeks of incubation.
RESULTS

| Viable Colonies per ml of Mycobacterium tuberculosae versus Time | | | | |
|---|---|---|---|---|
| SAMPLE | TIME (minutes) | | | |
| | 30 | 60 | 120 | 240 |
| Saline control | 10⁶ | 10⁶ | 10⁶ | 10⁶ |
| Peroxidase Chemistry | 5.0x10⁵ | 5.0x10⁵ | 10 | 2 |

The saline control did not exhibit any inactivation of Mycobacterium tuberculosae as expected. The Mycobacterium tuberculosae samples treated with the peroxidase-based sterilization chemistry reduced the number of viable organisms from 10⁶ per ml at time zero to 2 per ml at 240 minutes.
2. Pseudomonas aeruginosa (ATCC #15442), Staphylococcus aureus (ATCC #6538) and Salmonella choleraesuis (ATCC #10708) were grown overnight in anatone nutrient broth (AOAC p. 65, 4001a) supplemented with 5% calf serum. One hundred and eighty stainless steel penicylinders were soaked overnight in 1N sodium hydroxide, washed in water, autoclaved in 0.1% asparagine and used as carriers of bacteria. The stainless steel carriers were exposed to one type of organism as follows. Sixty of the sterile stainless steel penicylinders were immersed for fifteen minutes in 20 ml of the above cultures and dried on filter paper in a sterile petri dish at 35°C for forty minutes. To determine the number of colony forming units (cfu) on each penicylinder, carriers were vortexed for three minutes in saline to dislodge the adhering organisms and the number of cfu per penicylinder was determined.
A powder containing 10 mg horseradish peroxidase, 1 gram of sodium iodide, 0.158 grams of sodium perborate and 0.30 grams of sodium phosphate was dissolved in 1 liter of tap water. Each contaminated and dried carrier cylinder was placed into a separate tube containing 10 ml of disinfectant for ten minutes at 20°C in a temperature-controlled water bath. Each treated carrier was then transferred by hook needle at thirty-second staggered intervals to 10 ml of Letheen broth containing lecithin and tween-80. These samples were incubated for forty-eight hours at 35°C to determine if any organisms survived treatment. If no viable organisms were detected, the medium was treated with 100 or less cfu of the challenge organism to verify neutralization. This protocol was repeated three times, so that a total of one hundred and eighty carriers were tested with each organism (Pseudomonas aeruginosa, Staphylococcus aureus, Salmonella choleraesuis).
The identical experimental technique was used to test the ability of the organic donor molecules phenol and para-cresol to inactivate dehydrated bacteria. Instead of using sixty stainless steel penicylinders for each trial, eight cylinders were tested. Three of the cylinders were used for each bacteria to determine the number of viable bacteria per cylinder by vortexing the cylinder in saline and determining the number of colony forming units which were transferred into solution. The formulation of the disinfectant was identical to that used above (10 mg horseradish peroxidase, 0.158 grams of sodium perborate, 0.30 grams of sodium phosphate in 1 liter of tap water), except that the donor molecules used were phenol and para-cresol at a 0.10 millimolar concentration.
No viable organisms were found on any of the carriers after treatment when iodide was used as the donor. This clearly demonstrates the ability of iodide to serve as an effective donor molecule for the peroxidase-based inactivation of microorganisms which have been dried onto solid surfaces. In contrast, neither or the organic donor molecules (phenol and para-cresol) inactivated all of the dehydrated bacteria on any of the stainless steel penicylinders. This is consistent with previous observations using organic donor molecules that indicate they act as inhibitors rather than bactericides at high concentrations of hydrated bacteria.
TEST RESULTS

| Iodide as Donor | | | |
|---|---|---|---|
| Trial | Organism | Starting Organisms per Carrier | Number of Carriers with Viable Bacteria After Treatment |
| 1 | Pseudomonas aeruginosa | 2.0 x 10⁵ | 0 out of 60 |
| | Staphylococcus aureus | 2.0 x 10⁷ | 0 out of 60 |
| | Salmonella choleraesuis | 3.6 x 10⁴ | 0 out of 60 |
| 2 | Pseudomonas aeruginosa | 2.2 x 10⁵ | 0 out of 60 |
| | Staphylococcus aureus | 3.0 x 10⁵ | 0 out of 60 |
| | Salmonella choleraesuis | 2.0 x 10⁴ | 0 out of 60 |
| 3 | Pseudomonas aeruginosa | 2.1 x 10⁵ | 0 out of 60 |
| | Staphylococcus aureus | 2.8 x 10⁵ | 0 out of 60 |
| | Salmonella choleraesuis | 1.9 x 10⁵ | 0 out of 60 |

| Phenol as Donor | | | |
|---|---|---|---|
| 4 | Pseudomonas aeruginosa | 4.6 x 10⁵ | 5 out of 5 |
| | Staphylococcus aureus | 1.8 x 10⁵ | 5 out of 5 |
| | Salmonella choleraesuis | 6.0 x 10⁴ | 5 out of 5 |

| para-Cresol as Donor | | | |
|---|---|---|---|
| 5 | Pseudomonas aeruginosa | 4.6 x 10⁵ | 5 out of 5 |
| | Staphylococcus aureus | 1.8 x 10⁵ | 5 out of 5 |
| | Salmonella choleraesuis | 6.0 x 10⁴ | 5 out of 5 |

3. Bacteriophage T2 and 0̸xl74 was grown in Escherichia coli strain B and Escherichia coli strain C, respectively, (Carolina Biological Supply Company). To 0.8 ml of T2 and 0̸xl74 was added 0.010 ml of potassium iodide (40 mg/ml), 0.010 ml of 0.03% hydrogen peroxide and 0.010 ml of horseradish peroxidase (5 mg/ml) in 10 mM phosphate pH 7.0. This suspension was incubated for five minutes. Equal volumes of T2 and 0̸xl74 (0.20 ml), treated and untreated with peroxidase, were added to suspensions of warm agar containing Escherichia coli strain B and Escherichia coli strain C, respectively. The plates were checked for cell lysis. The viruses which were treated with the peroxidase-based sterilizing chemistry of this application did not exhibit any cell lysis. The bacteria on the control plates exhibited plaque formation. This experiment indicated that the peroxidase-based sterilization chemistry of this application is capable of inactivating viruses.
4. The peroxidase-based sterilization/disinfection chemistry was tested against spores of Bacillus pumillus at 1 million organisms per ml and compared to the activity of Chlorox bleach (NaOCl) and Sporocidin Lot No. LO853. The reagents used are shown below:
(1) Sodium iodide was dissolved at 150 mg in 100 ml of phosphate buffered saline (PBS).
(2) 30% hydrogen peroxide was diluted 1 part to 10,000 parts in PBS.
(3) Chlorox was 0.85% in PBS.
(4) Horseradish peroxidase was dissolved at 0.5 and 0.05 mg/ml.
(5) Chlorox was diluted to 0.5% in oil and 0.01% in water.
(6) Sporocidin was used undiluted and diluted 1/16 as per manufacturer's instructions.

(7) Organisms were spun down to remove growth media and diluted in PBS to yield 1 million organisms per ml.
The reagents were mixed in the following order in the designated aliquots:

| | ml |
|---|---|
| Phosphate buffered saline | 1.75 |
| Bacillus pumillus | 0.05 |
| Sodium iodide | 1.75 |
| Hydrogen peroxide | 0.50 |
| Horseradish peroxidase | 0.05 |

A volume of 0.50 ml of Bacillus pumillus which contained 30 million spores was added to 4.5 ml of the various dilutions of Chlorox, Sporocidin and the peroxidase-based sterilization chemistry of this application. At 10, 20 and 60 minutes, and at 24 hours, a sample was removed and diluted in trypticase soy broth with 2% tween-20 and 0.5% lecithin. For Chlorox-treated samples, 0.1% sodium sulfate was added to the trypticase soy broth mixture. The number of viable colonies was determined at each time point after a 48 hour incubation and the time required for a tenfold reduction in viable Bacillus pumillus was determined.
TEST RESULTS

| Chemistry | Time Required for Tenfold Reduction |
|---|---|
| Peroxidase (0.050 mg/ml) | 9.8 minutes |
| Peroxidase (0.0050 mg/ml) | 12.8 minutes |
| Chlorox (0.5%) | 1.8 minutes |
| Chlorox (0.1%) | 1.8 minutes |
| Chlorox (0.01%) | 1.8 minutes |
| Sporocidin (undiluted) | 2.78 minutes |
| Sporocidin (1/16 dilution) | 31.8 minutes |

These results indicate that the peroxidase-based sterilization chemistry is capable of inactivating spores in a period of time which is comparable to presently used sporicides.
5. Bacteriophage T2 was grown in Escherichia coli strain B and tittered to 1000 plaque forming units (pfu) per ml when assayed by the double-agar layer technique in 100 mm petri dishes. Potassium iodide (0.010 ml) at a concentration of 40 mg/ml, hydrogen peroxide (0.010 ml) at 0.03%, and phosphate buffer (100 mM, pH 5.0 and 7.0) was added to 0.80 ml of T2. Ten microliters of horseradish peroxidase was added to the samples; the stock solution of peroxidase (5 mg/ml in water) was diluted so that the lowest amount of peroxidase per ml in the final mixtures was 0.0007 mg/ml. The suspensions were incubated for five minutes. Aliquots of the suspensions were removed and added to suspensions of warm agar containing Escherichia coli strain B. The agar mixtures were poured onto plates and spread evenly over the surface. After solidifying at room temperature, the plates were incubated at 37°C. The plates were checked for plaque formation. At a pH of 5.0, no plaques were formed; at a pH of 7.0, some plaque formation was observed at a peroxidase concentration of 0.007 mg/ml on several plates.
6. Two identical scapels and forceps were autoclaved and placed on a shaking platform in a glass vessel containing a suspension of T2 virus in Escherichia coli strain B at 10,000 pfu/ml. Two of the instruments were removed and placed in a mixture containing 50 ml of 100 mM sodium phosphate (pH 5.5), 0.50 ml of potassium iodide (40mg/ml), and 0.50 ml hydrogen peroxide (0.3%). Horseradish peroxidase (0.50 ml at 5 mg/ml) was added and the solution was gently shaken. Controls were treated identically except for the omission of peroxidase. The reaction was allowed to proceed for ten minutes and then 20 ml of sodium fluoride was added (2.3 grams/liter). The scapels and forceps were removed from solution and placed in soft agar containing Escherichia coli strain B. The agar was allowed to solidify at room temperature and then incubated at 37°C in a standing incubator and checked for plaque formation. The controls exhibited plaque formation, while the samples treated with horseradish peroxidase did not form any plaques.
7. Pseudomonas aeruginosa and Salmonella monocytogenes were used to determine a relative rate of bacterial inactivation at pH values of 4.0, 5.0, 6.0 and 7.0. Overnight cultures of Pseudomonas aeruginosa and Salmonella monocytogenes were grown and suspended in a solution which contained 0.010 ml of potassium iodide (40 mg/ml), 0.010 ml of hydrogen peroxide (0.03%), 50 mM citrate at the indicated pH, and 0.010 ml of peroxidase (0.5 mg/ml). Aliquots were removed from this solution at various times, serially diluted and plated to determine the number of viable colonies per ml. The log reduction per minute was determined for each sample. The log reduction was calculated by subtracting the log of the number of surviving organisms at each time from the log of the number of initial organisms and dividing by the time of inactivation. The rate of inactivation of Pseudomonas aeruginosa and Salmonella monocytogenes was greater at pH values between 4.0 and 6.5 as compared to the rate of inactivation at pH 7.0.

| Salmonella monocytogenes Log Reduction per Minute | | | | |
|---|---|---|---|---|
| TIME (seconds) | pH 4.0 | pH 5.0 | pH 6.0 | pH 7.0 |
| 0 | -0- | -0- | -0- | -0- |
| 20 | 26 | 11.9 | 41 | 43 |
| 40 | 33 | -0- | 39 | 42 |
| 80 | 36 | -0- | 37 | 48 |

| Pseudomonas aeruginosa Log Reduction per Minute | | | | |
|---|---|---|---|---|
| TIME (seconds) | pH 4.0 | pH 5.0 | pH 6.0 | pH 7.0 |
| 0 | -0- | -0- | -0- | -0- |
| 45 | -0- | 27.8 | 40 | 70.3 |
| 90 | -0- | 28.4 | 37 | 68.7 |
| 80 | -0- | -0- | 34 | 65 |

8. Sodium iodide, hydrogen peroxide and sodium phosphate were mixed as follows:

| | |
|---|---|
| Sodium iodide, 10.0 mg/ml | 0.40 ml |
| Hydrogen peroxide 0.003% | 0.10 ml |
| Sodium phosphate pH 5.0, 0.10 Molar | 0.40 ml |

This mixture was added to several test tubes which contained 0.10 ml of horseradish peroxidase at concentrations which varied from 0.5 mg/ml to 0.00005 mg/ml. The activity of these mixtures was estimated after five minutes incubation by comparing the spectrophotometric activity of the resulting mixtures to known sporicidal activity of previously measured reactions using Bacillus pumillus spores in solution. The sporicidal activity was greatest at concentrations between 0.05 and 0.0005 mg/ml. The activity did not significantly decline until the concentration was reduced to 0.000005 mg/ml.
9. The oral toxicity of a mixture of sodium iodide, peroxide, hydrogen peroxide anti sodium phosphate was determined at a dose level of 5.0 grams per kilogram body weight using male and female adult albino Sprague-Dawley rats. A mixture of 3.5 grams of sodium iodide (600 parts), sodium perborate (63 parts), horseradish peroxidase (1 part), and sodium phosphate (120 parts) was added to 1000 ml of tap water and dissolved. Five female and five male rats were not fed for twenty-four hours and 0.97 ml of the test solution (specific gravity 1.03) was administered per 200 grams of body weight. Animals were observed for signs of illness and death to a total of fourteen days. All animals survived and at fourteen days were sacrificed by carbon dioxide asphyxiation and necropsied.
All animals appeared unaffected by the oral administration of the test article throughout the test period. All animals gained weight during the test period. The average weight gains for male during the test period was 113.2 grams. The average weight gain for female rats during the test period was 39.2 grams. The necropsy of the ten rats used for this study was negative in each instance. These measurements indicate that this formulation was non-toxic orally at 5 grams per kilogram body weight.
10. The ocular toxicity of a mixture of sodium iodide peroxide, hydrogen peroxide and sodium phosphate was determined using six different three-month-old male and female New Zealand white rabbits which weighed 2 to 3 kilograms. A mixture of 3.5 grams of sodium iodide (600 parts), sodium perborate (63 parts), horseradish peroxidase (1 part), and sodium phosphate (120 parts) was added to 1000 ml of tap water and dissolved. This solution was used to irrigate the eyes of each rabbit. A one cc syringe was used to instill 0.10 ml of the test solution into the lower conjunctival sac of the left eye of each rabbit. The lid of each rabbit was held closed for one second after instillation of the test solution. The opposite eye of each rabbit remained untreated and served as the comparative control.
Prior to the test article instillation, all test and control eyes were judged free of significant ocular irritation. To detect or confirm any pre-existing corneal injury, the eyes were treated with fluorescein stain and observed in a darkened room with ultraviolet light. The eyes were examined for ocular reactions at one hour after test article instillation and again at day 1, 2, 3, 4, 7, 14 and 21. The fluorescein staining procedure was conducted at each time interval.
No corneal opacity nor iritis was observed in any of the animals during the test period. Minimal transient conjunctivitis was observed in two out of the six animals within twenty-four hours after treatment. This condition was abolished at day 2. No accessory orbital growth nor inflammation to the surrounding ocular structure was observed in any of the animals. Therefore, under the conditions of this test, the sterilizing chemistry of this application was not an irritant to the ocular tissue of non-irrigated eyes.
11. The dermal irritation potential to intact and abraded skin of a mixture of sodium iodide, peroxide, hydrogen peroxide and sodium phosphate was determined using six different three-month-old male and female New Zealand white rabbits which weighed 2 to 3 kilograms. The left flank of each rabbit was clipped free of fur with an electric clipper before application of the sample. A mixture of 3.5 grams of sodium iodide (600 parts), sodium perborate (63 parts), horseradish peroxidase (1 part), and sodium phosphate (120 parts) was added to 1000 ml of tap water and dissolved. This solution was used to test for dermal irritation.
A 0.5 ml sample of the peroxidase-based sterilizing test solution was applied to the skin site (one site per rabbit) by introduction under a 1 x 1 inch 2-ply gauze patch. The patches were covered with non-irritating tape and the entire test site wrapped in an air-permeable orthopedic stockinet. After a four-hour exposure, the stockinet and test solution were removed. The test sites were wiped with tap water to remove any remaining test solution. Observations for erythema and edema were performed at 4, 24, 48, and 72 hours after application. No irritation was observed in any of the animals throughout the test period. Therefore, the peroxidase-based sterilizing chemistry of this application is non-irritating to the skin of rabbits.
12. The potential for allergic reactions from the peroxidase-based sterilizing chemistry of this application was measured using five male and five female Hartley-strain guinea pigs in the experimental control group and three male and three female guinea pigs as controls. The method used for this measurement utilized local inflammation of the sensitization site. The administration of adjuvant and repeated applications of the peroxidase-based sterilizing chemistry were performed within a one-week period to intensify the acquisition of hypersensitivity. The results of these measurements indicate that the peroxidase-based sterilization chemistry of this application does not cause topical allergic reactions.
A mixture of 3.5 grams of sodium iodide (600 parts), sodium perborate (63 parts), horseradish peroxidase (1 part), and sodium phosphate (120 parts) was added to 1000 ml of tap water and dissolved. This solution was used for all measurements. Control animals were used to determine the dermal irritation potential of the peroxidase-based sterilizing chemistry. A 0.5 ml dose of four concentrations (100%, 50%, 25%, 10%) of the peroxidase-based disinfecting chemistry were applied to the right and left skin sites of each of six guinea pigs by introduction under a one-inch square gauze patch. Each of the four skin sites per animal was covered occlusively with elastoplast and masking tape. After twenty-four hours, the patches were removed and skin sites were graded immediately for erythema and again at 48 and 72 hours. The undiluted formulation was used for primary the hypersensitivity challenge since it did not cause any skin irritation.
Allergic sensitivity to the peroxidase-based sterilizing chemistry of this application was induced as follows. The hair of ten different experimental animals was clipped with an Oster animal clipper using a #40 blade. Four 0.5 ml doses of the undiluted peroxidase-based sterilizing chemistry was added under one-inch square 2-ply gauze patches which were applied topically to the shoulder area of skin which had been excoriated with sandpaper. The skin was re-excoriated prior to each administration of the peroxidase-based sterilizing chemistry. Excoriation removed loose keratin which caused redness to the area but not bleeding. The application site was then covered with an occlusive wrap of elastoplast and masking tape. Induction doses were performed on days 0, 2, 4 and 7. The animals were examined 24, 48 and 72 hours after treatment for an allergic contact dermatitis. Each animal was given a score which ranged from 0 for no reaction to 3 for a deep red erythema with vesiculation. None of five males or five female guinea pigs had any reaction to the test regime.
An additional six animals were similarly sensitized with 25% isoeugenol in petrolatum and served as the positive control group. All of these animals exhibited either a mild or moderate allergic contact dermatitis.
13. The rate of inactivation is an important commercial variable for any sterilant. The overall reduction in the concentration of Aspergillus fumigatus was examined at different concentrations of the donor molecules. The initial concentration of Aspergillus fumigatus was one million organisms per ml. This study incorporated a ten percent (10%) organic load (as defined by the FDA). The final concentration of hydrogen peroxide was 30 parts per million, and the final concentration of peroxidase was 0.5 mg/ml. These reactions were run at pH 7.0 in 0.1 molar phosphate buffer.

| Effect of Iodide Concentration on the Rate of Inactivation of Aspergillus fumigatus | | |
|---|---|---|
| Concentration of Sodium Iodide | Log Reduction of A. fumigatus | |
| | At 5 minutes | At 10 minutes |
| 0.1 | 0 | 1 |
| 0.2 | 1 | 2 |
| 0.4 | 1 | 2 |
| 0.6 | 1 | 3 |
| 0.8 | 3 | 4 |
| 1.0 | 4 | 5 |

## Claims

1. A viscous epidermal sterilant formulation for admixture with water comprising surface active agents and a sterilant comprising essentially a peroxidase selected from the enzymes contained in the E.C. 1.11.1.7, a source of peroxide, an iodide compound which forms iodide ions upon dissolution in water, and a buffering agent in a concentration to maintain the pH of said admixture between 4.0 to 6.8, the viscosity of said formulation being above 2.5 centipoise.

2. A viscous epidermal sterilant formulation as defined in claim 1 wherein said buffering agent is selected from the group consisting of citrate, phosphate, Goode buffers, and phthalate.

3. A viscous epidermal sterilant formulation as defined in any of the preceding claims wherein said peroxidase is horseradish peroxidase.

4. A viscous epidermal sterilant formulation as defined in any of the preceding claims wherein said surface active agents are selected from the class consisting of surfactants, foam stabilisers, glycerol, glucose, fructose, galactose, sucrose, maltose and molecules consisting of anionic, cationic, zwitterionic, non-ionic and ampholytic surface active agents.

5. A viscous epidermal sterilant formulation as defined in any of the preceding claims wherein said source of peroxide is selected from the class consisting of hydrogen peroxide, methyl peroxide, persulphates, perphosphates, peroxyesters, urea peroxide, peroxyacids, alkylperoxides, perborates and mixtures thereof.

6. A viscous epidermal sterilant formulation as defined in any of the preceding claims wherein said iodide compound is selected from the class of salts of iodide comprising sodium iodide or potassium iodide.

7. A viscous epidermal sterilant formulation as defined in claim 6 wherein the concentration of said salt of iodide is between 0.5 and 5.0 mg/ml.

8. A viscous epidermal sterilant formulation according to any of the preceding claims formulated into separate parts, which comprises a first part comprising said iodide compound and a second part comprising said source of peroxide, said surface active agent(s), and buffer agent(s) to cause a pH for the admixture of said first and second parts in water between that of 4.0 and 6.8 and further comprising horseradish peroxidase as a component of said first part or as a third part to be admixed with said first and second part in water, said parts having a viscosity of above 2.5 centipoise after admixture in water.

9. A viscous epidermal sterilant formulation according to any of the preceding claims in the form of a soap.

10. A method of preparing a viscous epidermal sterilant formulation for admixture with water which method comprises providing surface active agents and a sterilant comprising essentially a peroxidase selected from the enzymes contained in the E.C. 1.11.1.7, a source of peroxide, an iodide compound which forms iodide ions upon dissolution in water, and a buffering agent in a concentration to maintain the pH of said admixture between 4.0 to 6.8, the viscosity of said formulation being above 2.5 centipoise.

11. The method of claim 10 wherein said buffering agent is selected from the group consisting of citrate, phosphate, Goode buffers, and phthalate.

12. The method of any of the claims 10 and 11 wherein said peroxidase is horseradish peroxidase.

13. The method of any of the claims 10 to 12 wherein said surface active agents are selected from the class consisting of surfactants, foam stabilizers, glycerol, glucose, fructose, galactose, sucrose, maltose and molecules consisting of anionic, cationic, zwitterionic, non-ionic and ampholytic surface active agents.

14. The method of any of the claims 10 to 13 wherein said source of peroxide is selected from the class consisting of hydrogen peroxide, methyl peroxide, persulphates, perphosphates, peroxyesters, urea peroxide, peroxyacids, alkylperoxides, perborates and mixtures thereof.

15. The methods of any of the claims 10 to 14 wherein said iodide compound is selected from the class of salts of iodide comprising sodium iodide or potassium iodide.

16. The method of claim 15 wherein the concentration of said salt of iodide is between 0.5 and 5.0 mg/ml.

17. The method of any of the claims 10 to 16 by which method the sterilant formulation is formulated into separate parts, which comprises a first part comprising said iodide compound and a second part comprising said source of peroxide, said surface active agent(s), a buffer agent(s) to cause a pH for the admixture of said first and second parts in water between that of 4.0 and 6.8 and further comprising horseradish peroxidase as a component of said first part or as a third part to be admixed with said first and second part in water, said parts having a viscosity of above 2.5 centipoise after admixture in water.

18. The method of any of the claims 10 to 17 providing said sterilant formulation in the form of a soap.

## Patentansprüche

1. Viskose, epidermale Sterilansformulierung zum Vermischen mit Wasser, umfassend oberflächenaktive Agenzien und ein Sterilans, das im wesentlichen Peroxidase, ausgewählt unter E.C. 1.11.1.7-Enzymen, eine Peroxidquelle, eine Iodidverbindung, die beim Lösen in Wasser Iodidionen bildet, und einen Puffer in einer Konzentration umfaßt, bei welcher der pH des Gemisches bei 4,0 bis 6,8 gehalten wird, wobei die Formulierung eine Viskosität von mehr als 2,5 Centipoise aufweist.

2. Viskose, epidermale Sterilansformulierung nach Anspruch 1, worin der Puffer ausgewählt ist unter Citrat, Phosphat, Goode-Puffern und Phthalat.

3. Viskose, epidermale Sterilansformulierung nach einem der vorhergehenden Ansprüche, worin die Peroxidase Meerrettich-Peroxidase ist.

4. Viskose, epidermale Sterilansformulierung nach einem der vorhergehenden Ansprüche, worin die oberflächenaktiven Agenzien ausgewählt sind unter Tensiden, Schaumstabilisatoren, Glycerin, Glucose, Fructose, Galactose, Saccharose, Maltose und Molekülen, die aus anionischen, kationischen, zwitterionischen, nicht-ionischen und ampholytischen oberflächenaktiven Agenzien bestehen.

5. Viskose, epidermale Sterilansformulierung nach einem der vorhergehenden Ansprüche, worin die Peroxidquelle ausgewählt ist unter Wasserstoffperoxid, Methylperoxid, Persulfaten, Perphosphaten, Peroxyestern, Harnstoffperoxid, Peroxysäuren, Alkylperoxiden, Perboraten und Gemischen davon.

6. Viskose, epidermale Sterilansformulierung nach einem der vorhergehenden Ansprüche, worin die Iodidverbindung unter einer Klasse von Iodidsalzen ausgewählt ist, die Natriumiodid oder Kaliumiodid umfaßt.

7. Viskose, epidermale Sterilansformulierung nach Anspruch 6, worin das Iodidsalz in einer Konzentration von 0,5 bis 5,0 mg/ml vorliegt.

8. Viskose, epidermale Sterilansformulierung nach einem der vorhergehenden Ansprüche, die in getrennten Teilen formuliert ist und einen ersten Teil, umfassend die Iodidverbindung, sowie einen zweiten Teil, umfassend die Peroxidquelle, das (die) oberflächenaktive(n) Agens (Agenzien) und Puffer, wodurch der pH des Gemisches aus dem ersten und zweiten Teil in Wasser zwischen 4,0 und 6,8 gehalten wird, und zusätzlich Meerrettich-Peroxidase als eine Komponente des ersten Teils oder als dritten Teil umfaßt, der in Wasser mit dem ersten und zweiten Teil vermischt wird, wobei die Teile nach dem Vermischen in Wasser eine Viskosität von mehr als 2,5 Centipoise aufweisen.

9. Viskose, epidermale Sterilansformulierung nach einem der vorhergehenden Ansprüche in Form einer Seife.

10. Verfahren zur Herstellung einer viskosen, epidermalen Sterilansformulierung zum Vermischen mit Wasser, wobei man oberflächenaktive Agenzien und ein Sterilans, umfassend im wesentlichen eine Peroxidase, ausgewählt unter E.C. 1.11.1.7-Enzymen, eine Peroxidquelle, eine Iodidverbindung, die beim Lösen in Wasser Iodidionen bildet, und einen Puffer in einer Konzentration bereitstellt, bei welcher der pH des Gemisches bei 4,0 bis 6,8 gehalten wird, wobei die Formulierung eine Viskosität von mehr als 2,5 Centipoise aufweist.

11. Verfahren nach Anspruch 10, worin der Puffer ausgewählt ist unter Citrat, Phosphat, Goode-Puffern und Phthalat.

12. Verfahren nach einem der Ansprüche 10 und 11, worin die Peroxidase Meerrettich-Peroxidase ist.

13. Verfahren nach einem der Ansprüche 10 bis 12, worin die oberflächenaktiven Agenzien ausgewählt sind unter Tensiden, Schaumstabilisatoren, Glycerin, Glucose, Fructose, Galactose, Saccharose, Maltose und Molekülen, die aus anionischen, kationischen, zwitterionischen, nicht-ionischen und ampholytischen oberflächenaktiven Agenzien bestehen.

14. Verfahren nach einem der Ansprüche 10 bis 13, worin die Peroxidquelle ausgewählt ist unter Wasserstoffperoxid, Methylperoxid, Persulfaten, Perphosphaten, Peroxyestern, Harnstoffperoxid, Peroxysäuren, Alkylperoxiden, Perboraten und Gemischen davon.

15. Verfahren nach einem der Ansprüche 10 bis 14, worin die Iodidverbindung unter einer Klasse von Iodidsalzen ausgewählt ist, die Natriumiodid oder Kaliumiodid umfaßt.

16. Verfahren nach Anspruch 15, worin das Iodidsalz in einer Konzentration von 0,5 bis 5,0 mg/ml vorliegt.

17. Verfahren nach einem der Ansprüche 10 bis 16, wobei die Sterilansformulierung in getrennten Teilen formuliert wird und einen ersten Teil, umfassend die Iodidverbindung, sowie einen zweiten Teil, umfassend die Peroxidquelle, das (die) oberflächenaktive(n) Agens (Agenzien) und Puffer, wodurch der pH des Gemisches aus dem ersten und zweiten Teil in Wasser zwischen 4,0 und 6,8 gehalten wird, und zusätzlich Meerrettich-Peroxidase als eine Komponente des ersten Teils oder als dritten Teil umfaßt, der in Wasser mit dem ersten und zweiten Teil vermischt wird, wobei die Teile nach dem Vermischen in Wasser eine Viskosität von mehr als 2,5 Centipoise aufweisen.

18. Verfahren nach einem der Ansprüche 10 bis 17, wobei die Sterilansformulierung in Form einer Seife bereitgestellt wird.

## Revendications

1. Formulation d'agent stérilisateur pour l'épiderme visqueuse destinée à être mélangée avec de l'eau comprenant des agents de surface et un agent stérilisateur comprenant essentiellement une peroxydase choisie parmi les enzymes contenues dans E.C. 1.11.1.7, une source de peroxyde, un composé iodure qui forme des ions iodure lors de sa dissolution dans l'eau, et un agent tampon en concentration suffisante pour maintenir le pH dudit mélange entre 4,0 et 6,8, la viscosité de ladite formulation étant supérieure à 2,5 centipoises.

2. Formulation d'agent stérilisateur pour l'épiderme visqueuse selon la revendication 1, dans laquelle ledit agent tampon est choisi parmi le groupe formé par le citrate, le phosphate, les tampons Goode, et le phtalate.

3. Formulation d'agent stérilisateur pour l'épiderme visqueuse, selon l'une des revendications précédentes, dans laquelle ladite peroxydase est de la peroxydase de raifort.

4. Formulation d'agent stérilisateur pour l'épiderme visqueuse, selon l'une des revendications précédentes, dans laquelle lesdits agents de surface sont choisis dans la classe formée par les tensioactifs, les stabiliseurs de mousse, le glycérol, le glucose, le fructose, le galactose, le sucrose, le maltose et les molécules se composant d'agents de surface anioniques, cationiques, zwitterioniques, non ioniques et ampholytes.

5. Formulation d'agent stérilisateur pour l'épiderme visqueuse selon l'une des revendications précédentes, dans laquelle ladite source de peroxyde est choisie dans la classe formée par le peroxyde d'hydrogène, le peroxyde de méthyle, les persulfates, les perphosphates, les peroxyesters, le peroxyde d'urée, les peroxyacides, les peroxydes d'alkyle, les perborates et leurs mélanges.

6. Formulation d'agent stérilisateur pour l'épiderme visqueuse selon l'une des revendications précédentes, dans laquelle ledit composé iodure est choisi dans la classe formée par les sels iodure comprenant l'iodure de sodium ou l'iodure de potassium.

7. Formulation d'agent stérilisateur pour l'épiderme visqueuse selon la revendication 6, dans laquelle la concentration dudit sel iodure est comprise entre 0,5 et 5,0 mg/ml.

8. Formulation d'agent stérilisateur pour l'épiderme visqueuse selon l'une des revendications précédentes, formulée en parties séparées, qui comprend une première partie comprenant ledit composé iodure et une deuxième partie comprenant ladite source de peroxyde, ledit ou lesdits agent(s) de surface et agent(s) tampon pour obtenir un pH du mélange desdites première et deuxième parties dans l'eau compris entre 4,0 et 6,8 et comprenant en outre de la peroxydase de raifort en tant que composant de ladite première partie ou en tant que troisième partie devant être mélangée avec lesdites première et deuxième parties dans l'eau, lesdites parties ayant une viscosité supérieure à 2,5 centipoises après mélange dans l'eau.

9. Formulation d'agent stérilisateur pour l'épiderme visqueuse selon l'une des revendications précédentes qui est sous la forme d'un savon.

10. Procédé de préparation d'une formulation d'agent stérilisateur pour l'épiderme visqueuse destinée à être mélangée avec de l'eau, ledit procédé consistant à fournir des agents de surface et un agent stérilisateur comprenant essentiellement une peroxydase choisie parmi les enzymes contenues dans E.C. 1.11.1.7, une source de peroxyde, un composé iodure qui forme des ions iodure lorsqu'il est dissous dans l'eau, et un agent tampon en une concentration suffisante pour maintenir le pH dudit mélange entre 4,0 et 6,8, la viscosité de ladite formulation étant supérieure à 2,5 centipoises.

11. Procédé selon la revendication 10, dans lequel ledit agent tampon est choisi dans le groupe formé par le citrate, le phosphate, les tampons Goode, et le phtalate.

12. Procédé selon les revendications 10 et 11, dans lequel ladite peroxydase est de la peroxydase de raifort.

13. Procédé selon l'une des revendications 10 à 12, dans lequel lesdits agents de surface sont choisis dans la classe formée par les tensioactifs, les stabiliseurs de mousse, le glycérol, le glucose, le fructose, le galactose, le sucrose, le maltose et les molécules se composant d'agents de surface anioniques, cationiques, zwitterioniques, non ioniques et ampholytes.

14. Procédé selon l'une des revendications 10 à 13, dans lequel ladite source de peroxyde est choisie dans la classe formée par le peroxyde d'hydrogène, le peroxyde de méthyle, les persulfates, les perphosphates, les peroxyesters, le peroxyde d'urée, les peroxyacides, les peroxydes d'alkyle, les perborates et leurs mélanges.

15. Procédé selon l'une des revendications 10 à 14, dans lequel le composé iodure est choisi dans la classe des sels iodure formée par l'iodure de sodium ou l'iodure de potassium.

16. Procédé selon la revendication 15, dans lequel la concentration dudit sel iodure est comprise entre 0,5 et 5,0 mg/ml.

17. Procédé selon l'une des revendications 10 à 16, selon lequel la formulation d'agent stérilisateur est formulée en parties séparées, qui comprend une première partie comprenant ledit composé iodure et une deuxième partie comprenant ladite source de peroxyde, ledit (lesdits) agent(s) de surface, un (des) agent(s) tampon, pour obtenir un pH du mélange desdites première et deuxième parties dans l'eau compris entre 4,0 et 6,8 et comprenant en outre de la peroxydase de raifort comme composant de ladite première partie ou comme troisième partie à mélanger avec lesdites première et deuxième parties dans l'eau, lesdites parties ayant une viscosité supérieure à 2,5 centipoises après mélange dans l'eau.

18. Procédé selon l'une des revendications 10 à 17, qui conduit à ladite formulation d'agent stérilisateur sous la forme d'un savon.
